# EUROPEAN PATENT APPLICATION

(11) **EP 3 319 025 A1**
(43) Date of publication of application: **09.05.2018**
(21) Application number: 17200515.9
(22) Date of filing: 08.11.2017
(51) Int. Cl.: G06Q 10/06

(54) **APPARATUS FOR MONITORING OPERATING PARAMETERS FOR SAFETY IN WORKING ENVIRONMENTS**

(30) Priority: 08.11.2016 IT 201600112446
(71) Applicant: Simav S.p.A., 00193 Roma (RM) (IT)
(72) Inventor: ESPOSITO, MASSIMO, 00173 ROMA (RM) (IT)
(74) Representative: Scorza, Federica

(57) **Abstract**

Apparatus (100) for monitoring operating parameters for safety in working environments comprising: a wearable devices apparatus (101) for the monitoring and the transmission of operating parameters of a person; at least one mobile device (102) for receiving, processing and displaying the detected operating parameters, provided with interface to the web and internet access; At least one server (103), or "cloud storage", configured to receive and store the operating parameters sent by the at least one mobile device (102) and make these parameters available to further mobile devices able to be connected via Internet; and at least one web application (104), or "Control Room", configured to display graphic processing of the operating parameters received from said server (103);

The wearable devices apparatus (101) also comprises: at least one abdominal band (101a) comprising at least altimetry sensors, at least haptic sensors, at least acoustic sensors and at least actuators; at least a helmet (101b) comprising at least sensors for worn helmet detection, ambient temperature sensors, sensors for detecting working height relative to the ground of the person wearing the helmet, sensors of the sound level of the surrounding environment; and at least two shoes (101c) comprising at least sensors for detection of the weight exercised by the operator which operates on a work floor, at least sensors of the loads raised by the person, and at least acceleration sensors of the person.

## Description

The present invention relates to an apparatus for monitoring operating parameters for safety in working environments.

In particular, the present invention relates to an apparatus for monitoring operating parameters for safety in working environments, of the type that uses wearable sensors.

As it is known, in recent years the safety of workers at the workplace has been subjected to a continuous evolution both from a legal and technology point of view.

On one hand, the reference standards have imposed to the employer to take and implement all preventive security measures in the workplace to reduce the level of risk to which the worker is exposed during the performance of work.

On the other hand, the technological evolution has made possible the development and use of personal protective equipment (dpi) where the rules adopted do not imply a significant reduction of the worker's level of risk.

However, although the latter devices have contributed to the reduction of accidents at work and increased safety of workers, there is currently no prevention devices that interact with the control and monitoring systems, able to control and monitor in real-time the security of workers and prevent dangerous situations.

Purpose of the present invention is to provide an apparatus for monitoring operating parameters for safety in working environments that guarantee a real-time monitoring of a condition of personal safety in the working environment and can warn of any dangerous situation or for emergency to prevent dangerous situations that may occur in the workplace and having, therefore, characteristics such as to overcome the limitations which still affect the previously described system with reference to the prior art.

According to the present invention, an apparatus for monitoring operating parameters for safety in working environments is provided, as defined in claim 1.

For a better understanding of the present invention, a preferred embodiment is now described, purely by way of non-limiting example, with reference to the accompanying drawings in which:
- Figure 1 shows a schematic view of a functional block diagram of an apparatus for monitoring operating parameters for safety in working environments, according to the invention;
- Figure 2 shows a schematic view of a functional block diagram of an apparatus for monitoring operating parameters for safety in working environments applied on a person in the working environment, according to the invention.

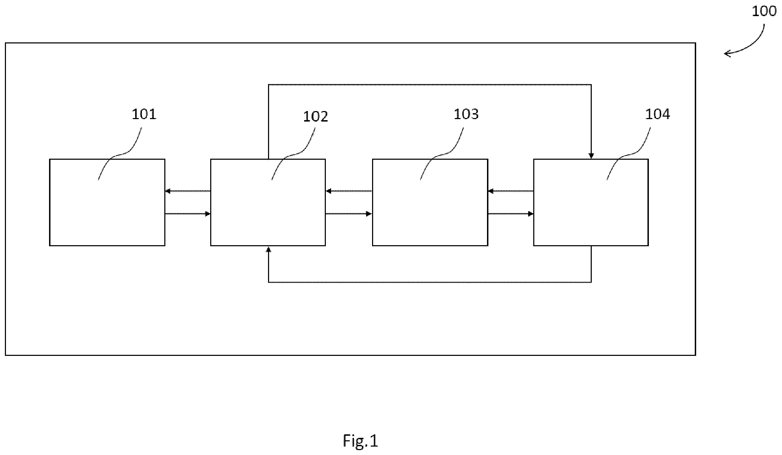

With reference to these figures and, and in particular, to Figure 1, an apparatus for monitoring operating parameters for safety in working environments is shown, according to the invention.

More specifically, the apparatus for monitoring operating parameters for safety in working environments 100 comprises an apparatus 101 of wearable devices for monitoring and transmitting operating parameters of a person; a mobile device 102 receiving, processing and displaying the operating parameters detected, provided with interface to the web and internet access; a server 103 that acts as a "cloud storage", that receives and stores the operating parameters sent from the mobile device 102 and makes them available to other mobile devices that can be connected via the Internet; and a software application 104, herein referred to as "Control Room", which runs on the web, configured to display graphic processing of the operating parameters received from the "cloud storage" in order to monitor the evolution of the operating parameters received.

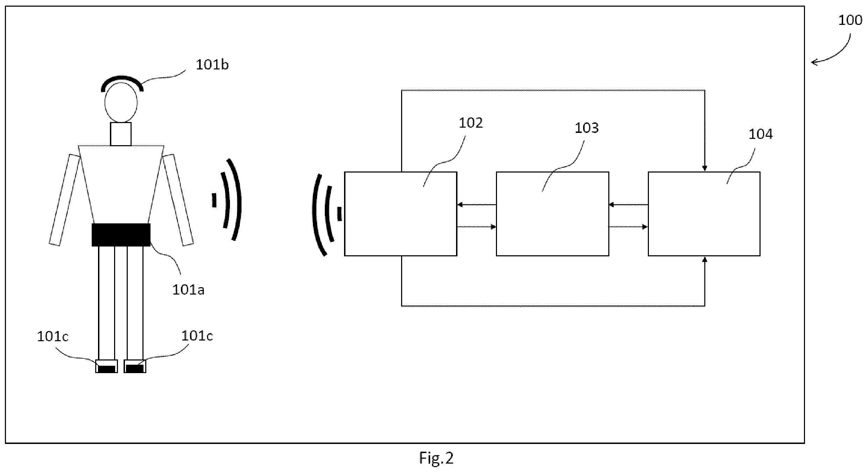

According to an aspect of the invention, as better shown in Figure 2, apparatus 101 of wearable devices for monitoring and transmitting operating parameters of a person comprises a plurality of wearable devices, and, in particular, at least one abdominal band 101a, a helmet 101b and shoes 101c. More specifically, the abdominal band 101a includes altimeter sensors, aptic sensors, or vibration sensors, acoustic and actuator sensors. The helmet 101b includes helmet worn detection sensors, the ambient temperature sensors, sensors for the working height of the person wearing the helmet with respect to the ground, the sound level in decibels of the surrounding environment. The shoes 101c include sensors of the weight exerted by the operator which moves on a work surface detection, of the loads raised by the person, and of the accelerations of movement of the person itself.

Advantageously according to the invention, all wearable devices of the apparatus 101 are equipped with Bluetooth communication.

Advantageously according to the invention, the mobile device 102, such as a smart phone or tablet, has Bluetooth communication.

According to an aspect of the invention, data processed and classified by server 103 and sent to web application 104 are:
- historical weight daily detected through the sensors 101c of the shoes;
- Daily history of the sound level detected by the sensors of the helmet 101b;
- Daily fall of the worker;
- Height operational work;
- Temperature of the environment surrounding the worker.

In use, the sensors of the abdominal band 101a, of the helmet 101b and of the shoes 101c communicate with the mobile device 102 via Bluetooth. The mobile device 102 is configured to process and display the detected operating parameters by means of a dedicated application, and then send them via the Internet to the server, or "cloud", 103 storage. Then the specific application 104 that runs on the web, reworks and displays graphic processing of operating parameters related to the person in the workplace. In the event of a hazard during work, such as falling, ground, excessive noise, excessive environmental temperature rise and other types of danger, the application 104 processes the hazard signal and transmits it back to server 103 which communicates with the mobile device 102. The latter refers to a feedback signal to the aptic sensors of the abdominal band 101a, which, by vibration, alert the person of the imminent danger in real time.

For example, when the mobile device 102 is active and receives weight data from sensors shoes 101c, sends an alarm signal to the server 103 and then to the web application 104.

In fact, when the web application 104 verifies that the received data has unexpected values, namely a situation of danger for the worker, such as excessive sound level, it sends a notification to the mobile device 102 held by the worker concerned and to other mobile devices, the type of the mobile device 102, which are active nearby.

Therefore, the apparatus for monitoring operating parameters for safety in working environments according to the invention is able to monitor in real time the level of risk of the worker during the work shift.

Another advantage of the apparatus for monitoring operating parameters for safety in working environments according to the invention consists in the fact that it is able to prevent hazardous and harmful situations that may occur in the workplace.

Another advantage of the apparatus for monitoring operating parameters for safety in working environments according to the invention is that it is possible to detect an accident and call for help in a timely manner.

Finally, the apparatus for monitoring operating parameters for safety in working environments according to the invention is easily usable is of low cost.

Finally it is clear that at the apparatus for monitoring operating parameters for safety in working environments described and illustrated herein modifications and variations can be made without departing from the scope of the present invention, as defined in the appended claims.

## Claims

1. Apparatus (100) for monitoring operating parameters for safety in working environments comprising:
- a wearable devices apparatus (101) for the monitoring and the transmission of operating parameters of a person;
- at least one mobile device (102) for receiving, processing and displaying the detected operating parameters, provided with interface to the web and internet access;
- At least one server (103), or "cloud storage", configured to receive and store the operating parameters sent by the at least one mobile device (102) and make these parameters available to further mobile devices able to be connected via Internet;
- and at least one web application (104), or "Control Room", configured to display graphic processing of the operating parameters received from said server (103); **Characterized in that** the wearable devices apparatus (101) comprises:
- at least one abdominal band (101a) comprising at least altimetry sensors, at least haptic sensors, at least acoustic sensors and at least actuators;
- at least a helmet (101b) comprising at least sensors for worn helmet detection, ambient temperature sensors, sensors for detecting working height relative to the ground of the person wearing the helmet, sensors of the sound level of the surrounding environment; and
- at least two shoes (101c) comprising at least sensors for detection of the weight exercised by the operator which operates on a work floor, at least sensors of the loads raised by the person, and at least acceleration sensors of the person.

2. Apparatus (100) according to claim 1, **characterized in that** the wearable devices for monitoring operating parameters of a person of said apparatus (101) are configured to communicate via Bluetooth.

3. Apparatus (100) according to claim 1, **characterized in that** said at least one mobile device (102) is a smart-phone or tablet configured to communicate via Bluetooth.

4. Apparatus (100) according to claim 1, **characterized in that** said server (103) is configured to receive data sent from the web application (104) and classify these data as data comprised in the group consisting of:
- daily weight data;
- daily sound level data;
- daily worker falls data;
- working height;
- Temperature of the ambient in which the person works.
